# EUROPÄISCHE PATENTSCHRIFT

(11) **EP 2 457 758 B1**
(45) Veröffentlichungstag und Bekanntmachung des Hinweises auf die Patenterteilung: **19.02.2014**
(21) Anmeldenummer: 09004861.2
(22) Anmeldetag: 02.04.2009
(51) Int. Cl.: B60J 7/185

(54) **Verdeck eines Cabriolet-Fahrzeugs mit einer Zentriereinrichtung zur Festlegung an einem Windschutzscheibenrahmen oder einer A-Säule**
Roof of a convertible vehicle with a centering device for attachment to a windscreen frame or an A column
Capote d'un véhicule cabriolet dotée d'un dispositif de centrage destiné à la fixation sur un cadre de pare-brise ou sur un pillier A

(30) Priorität: 14.04.2008 DE 102008018673
(43) Veröffentlichungstag der Anmeldung: 30.05.2012
(73) Patentinhaber: Renault S.A.S., 92100 Boulogne-Billancourt (FR); Valmet Automotive Oy, 23500 Uusikaupunki (FI)
(72) Erfinder: Plesternings, Frank, 49176 Hilter (DE); Hahn, Stefan, 49080 Osnabrück (DE)
(74) Vertreter: Kronthaler, Schmidt & Coll.

(56) Entgegenhaltungen:
- DE-A1- 10 105 771
- DE-A1-102005 038 703
- DE-A1-102005 040 478
- DE-A1-102006 024 612
- DE-C1- 3 940 503
- DE-C1- 4 312 323

## Beschreibung

Die Erfindung betrifft ein Verdeck eines Cabriolet-Fahrzeugs mit einer Zentriereinrichtung zur Festlegung an einem Windschutzscheibenrahmen oder einer A-Säule nach der im Oberbegriff des Patentanspruches 1 näher definierten Art.

Aus der Praxis sind Zentriereinrichtungen bekannt, welche mit einem an einem Verdeck angeordneten Zentrierelement und einem an einem Windschutzscheibenrahmen oder einer A-Säule des Cabriolet-Fahrzeugs angeordneten Zentriergegenelement ausgebildet sind. Bei einer Überführung des Verdecks von seiner offenen Position in seine geschlossene Position wirkt das Zentrierelement derart mit dem Zentrierelement zusammen, dass das Verdeck gegenüber dem Windschutzscheibenrahmen bzw. der A-Säule definiert positioniert wird, so dass das Verdeck mittels einer Verriegelungsvorrichtung an dem Windschutzscheibenrahmen bzw. der A-Säule festgelegt werden kann.

Bekannte Zentrierelemente sind dabei in einem in geschlossener Position des Verdecks in Fahrzeugfrontrichtung weisenden Ende eines vorderen Dachteils angeordnet, wobei derartige Zentrierelemente beispielsweise als Zentrierzapfen ausgebildet sind.

Allerdings sind solche Zentriereinrichtungen nachteilhafterweise kostenintensiv an dem vorderen Dachteil anzuordnen und weisen häufig eine insbesondere in einem Crash-Fall unerwünscht geringe Festigkeit auf.

Aus der DE 10 2005 038 703 A1 ist ein Faltverdeck eines Cabriolets mit einem Verdeckgestänge zur Bewegung des Faltverdecks bekannt, wobei das Verdeckgestänge ein vorderes Rahmenteil, ein mittleres Rahmenteil und ein hinteres Rahmenteil aufweist. Mit dem vorderen Rahmenteil ist ein Rahmenteil einer Verdeckspitze verbunden, an welchem wiederum ein bei geschlossenem Faltverdeck in eine zugeordnete Aufnahme an einem Windlauf eingreifender Zentrierstift angeordnet ist. Zudem ist an dem Rahmenteil eine Riegeleinrichtung mit einem Verschlusshaken angeordnet, welcher in geschlossener Position des Faltverdecks einen Anker am Windlauf hintergreift.

Es ist Aufgabe der vorliegenden Erfindung ein Verdeck eines Cabriolet-Fahrzeugs der eingangs genannten Art zu schaffen, welches eine Zentriereinrichtung zur zentrierten Anordnung des Verdecks an einem Windschutzscheibenrahmen bzw. wenigstens einer A-Säule des Cabriolet-Fahrzeugs aufweist, wobei ein Zentrierelement der Zentriereinrichtung auf einfache und kostengünstige Weise verdeckseitig anordenbar ist und die Zentriereinrichtung sehr stabil ausgebildet ist.

Diese Aufgabe wird bei einem Verdeck der eingangs genannten Art gemäß den Merkmalen des kennzeichnenden Teils des Patentanspruches 1 gelöst.

Vorteilhafte Weiterbildungen eines Verdecks nach der Erfindung ergeben sich aus den Unteransprüchen.

Es wird somit ein Verdeck eines Cabriolet-Fahrzeugs vorgeschlagen, welches mittels eines Verdeckgestänges zwischen einer einen Fahrgastraum überspannenden geschlossenen Position und einer den Fahrgastraum freigebenden offenen Position verfahrbar ist, mit wenigstens einer Verriegelungsvorrichtung mittels welcher ein vorderer Bereich des Verdecks an einem Windschutzscheibenrahmen bzw. an wenigstens einer A-Säule des Cabriolet-Fahrzeugs festlegbar ist, wobei die Verriegelungsvorrichtung mit einem dem vorderen Bereich des Verdecks zugeordneten Verriegelungselement und einem dem Windschutzscheibenrahmen bzw. einer A-Säule zugeordneten Verriegelungsgegenelement ausgebildet ist, und wobei das Verriegelungselement mittels einer Antriebseinrichtung in geschlossener Position des Verdecks zwischen einer mit dem Verriegelungsgegenelement zusammenwirkenden ersten Position und einer das Verriegelungsgegenelement freigebenden zweiten Position verfahrbar ist; und wobei ein Zentrierelement wenigstens einer Zentriereinrichtung im Bereich des vorderen Bereichs des Verdecks vorgesehen ist, welches zum Zusammenwirken mit einem an dem Windschutzscheibenrahmen bzw. der A-Säule angeordneten Zentriergegenelement der Zentriereinrichtung ausgebildet ist, wobei das Zentrierelement integral mit einem Verdeckgestängeelement des Verdeckgestänges ausgebildet ist. Dabei ist erfindungsgemäß vorgesehen, dass das Zentrierelement ein freies Stangenende des Verdeckgestängeelements ist.

Ein erfindungsgemäßes Verdeck, welches als Soft-Top-Verdeck oder als Hard-Top-Verdeck ausgebildet sein kann, hat den Vorteil, dass die integral mit einem Verdeckgestängeelement des Verdeckgestänges ausgebildete Zentriereinrichtung mit dem Verdeckgestängeelement gefertigt werden kann und somit in einfacher und kostengünstiger Weise ausgebildet ist. Insbesondere vorteilhaft ist es dabei, dass das Zentrierelement der Zentriereinrichtung durch die integrale Ausbildung mit dem Verdeckgestängeelement nicht separat gegenüber dem Verdeck und/oder dem Windschutzscheibenrahmen bzw. der wenigstens einen A-Säule justiert werden muss, sondern bereits durch den Einbau des Verdeckgestängeelements in das Verdeck gegenüber dem Verdeck definiert festgelegt ist.

Bei dem erfindungsgemäßen Verdeck kann das Zentrierelement in einem dem Zentriergegenelement zuweisenden Bereich des Verdecks angeordnet werden und mittels eines einfachen Mechanismus mit dem Zentriergegenelement zusammenwirken.

Der gesamte verdeckseitige Teil der Verriegelungsvorrichtung kann dabei an das Verdeckgestängeelement angebunden bzw. voll in das Verdeckgestängeelement integriert sein, wobei hierzu keine Befestigungselemente erforderlich sind. Die Verriegelungsvorrichtung kann somit insbesondere als vorgefertigtes Modul an dem Verdeckgestängeelement angeordnet werden, wobei sich die Elemente der Verriegelungsvorrichtung dabei durch einen schlanken Aufbau und ein verbessertes Package auszeichnen.

Eine derartige Verriegelungsvorrichtung kann zudem auf besonders flexible Weise derart realisiert werden, dass die Verriegelungsvorrichtung in einem modulträgerähnlichen Aufbau oder in der gleichen Linie wie das Verdeckgestängeelement fertigbar ist, so dass eine Einstellung der Verriegelungsvorrichtung vorteilhafterweise bereits bei der Anordnung der Verriegelungsvorrichtung an dem Verdeckgestängeelement vornehmbar ist und Elemente der Verriegelungsvorrichtung insgesamt hierdurch sehr toleranzunempfindlich sind.

Für die Anordnung der Antriebseinrichtung an dem Verdeck werden keine separaten Befestigungselemente wie Trägerbleche oder Gussgrundplatten benötigt, so dass hierdurch vorteilhafterweise eine Gewichtsreduzierung und eine Kostenreduzierung erzielt werden kann, wobei zudem der Lebenszyklus gegenüber bekannten Systemen vorteilhafterweise nicht eingeschränkt ist.

Eine derartige Verriegelungsvorrichtung zeichnet sich dabei vorteilhafterweise durch die Verwendung von einfachen Bauteilen und einem einfachen Aufbau aus, so dass die Verriegelungsvorrichtung kostengünstig fertigbar ist.

Zudem ist es möglich, dass die Verriegelungsvorrichtung zur Positionssicherung des Verdecks in einer abgelegten Position genutzt werden kann.

Eine erfindungsgemäße Zentriereinrichtung weist zudem eine sehr hohe Kraftaufnahmefähigkeit auf, da beispielsweise in einem Crashfall eine auf die Zentriereinrichtung wirkende Kraft von dem Zentrierelement über das vordere Verdeckgestängeelement bis in ein Hauptlager des Verdecks übertragen wird.

In einer vorteilhaften Ausbildung eines erfindungsgemäßen Verdecks kann das Verdeckgestängeelement in einem seitlichen Bereich des vorderen Bereichs des Verdecks angeordnet sein, so dass die Zentriereinrichtung in sehr Platz sparender Weise an dem Verdeck angeordnet werden kann. Hierbei kann es auch vorgesehen sein, dass das Verdeck zwei Zentriereinrichtungen aufweist, wobei eine erste Zentriereinrichtung in einem einer linken Fahrzeugseite zugeordneten Bereich an einem Verdeckgestängeelement und eine zweite Zentriereinrichtung in einem einer rechten Fahrzeugseite zugeordneten Bereich an einem Verdeckgestängeelement angeordnet wird.

Ein sehr funktions- und ausfallsicheres Zentrierelement kann in einer vorteilhaften Weiterbildung der Erfindung dadurch geschaffen werden, dass das Verdeckgestängeelement in einem Bereich des Zentrierelements gehärtet ausgebildet ist.

Wenn das Zentrierelement in geschlossener Position des Verdecks elastisch in dem Zentriergegenelement gelagert ist, kann hierdurch vorteilhafterweise auf eine Justierung des Zentrierelements gegenüber dem Zentriergegenelement der Zentriereinrichtung verzichtet werden. Durch die flexible Lagerung des Zentrierelements in dem Zentriergegenelement, welche somit als Klapperschutz wirkt, kann für das Verriegelungselement der Verriegelungsvorrichtung eine Vorspannung erzeugt werden.

In einer konstruktiv einfachen Ausgestaltung des Zentriergegenelements kann es vorgesehen sein, dass das Zentriergegenelement zur elastischen Lagerung das Zentrierelements mit einem metallischen äußeren ersten Element und einem mit einem Kunststoff ausgebildeten inneren zweiten Element ausgebildet ist.

Die elastische Lagerung des Zentrierelements in dem Zentrierelement kann dadurch erreicht werden, dass das erste Element des Zentriergegenelements über wenigstens einen insbesondere mit einer Nietverbindung ausgebildeten Befestigungspunkt an dem zweiten Element des Zentriergegenelements angeordnet ist und das zweite Element des Zentriergegenelements hierdurch insbesondere schwimmend in dem ersten Element des Zentriergegenelements gelagert ist.

In einer vorteilhaften Weiterbildung eines erfindungsgemäßen Verdecks kann das Zentriergegenelement eine Rolleneinrichtung aufweisen, welche bei einem Einführen des Zentrierelements in das Zentriergegenelement oder umgekehrt mit dem Zentrierelement zusammenwirkt und dabei ein besonders schonendes und belastungsarmes Zusammenwirken des Zentrierelements mit dem Zentriergegenelement ermöglicht.

Eine weitere bevorzugte Ausführung eines Verdecks nach der Erfindung kann vorsehen, dass die Antriebseinrichtung mittels eines Verbindungselements mit dem Verriegelungselement zusammenwirkt, wobei das Zusammenwirken der Antriebseinrichtung mit dem Verriegelungselement dabei flexibel gestaltet und die Antriebseinrichtung variabel gegenüber dem Verriegelungselement an dem Verdeckgestängeelement angeordnet werden kann.

Weiterhin kann in einer vorteilhaften Ausbildung der Erfindung das Verbindungselement in einem dem Verriegelungselement abweisenden Bereich wenigstens ein Funktionselement aufweisen. Hierdurch kann eine Verriegelungsvorrichtung nach der Erfindung vorteilhafterweise funktional erweitert werden, wobei durch eine derartige Funktionserweiterung Bauteile und somit auch Kosten und Bauraum eingespart werden können.

Hierbei ist es vorteilhaft, wenn das Funktionselement als ein Verschlusssystem ausgebildet ist, mittels welchem insbesondere ein vorderes Dachteil in geschlossener Position des Verdecks an einem hinteren Dachteil festlegbar ist. Weiterhin kann das Funktionselement auch als ein Verschlusssystem ausgebildet sein, mittels welchem Elemente des Verdeckgestells gegenüber Anbauteilen, beispielsweise ein vorderes Dachteil in geschlossener Position des Verdecks an wenigstens einer C-Säule, festlegbar ist. Die C-Säule kann in einem solchen Fall über die Verriegelungsvorrichtung vorteilhafterweise in ihrer Nulllage gehalten werden.

Zur Flexibilisierung der Anbindung des Funktionselements an das Verbindungselement kann es in einer vorteilhaften Ausbildung der Erfindung vorgesehen sein, dass das Verbindungselement über ein Hebelelement mit dem Funktionselement zusammenwirkt.

Weitere Vorteile und vorteilhafte Ausführungen eines Verdecks eines Cabriolet-Fahrzeugs nach der Erfindung ergeben sich aus der Zeichnung und der Beschreibung.

Nachfolgend sind vorteilhafte Ausführungsbeispiele eines Verdecks eines Cabriolet-Fahrzeugs anhand der Zeichnung prinzipmäßig beschrieben, wobei für funktions- und baugleiche Bauteile der Einfachheit halber dieselben Bezugszeichen verwendet werden.

### Es zeigt:

- Fig. 1: eine vereinfachte dreidimensionale Darstellung eines Cabriolet-Fahrzeugs mit einem Verdeck in einer geschlossenen Position, wobei das Verdeck mit einem vorderen Dachteil und einem hinteren Dachteil ausgebildet ist;
- Fig. 2: eine vereinfachte dreidimensionale Darstellung eines Ausschnitts des Verdecks der Figur 1 im Bereich eines vorderen Dachteils und dessen Übergang zu einem hinteren Dachteil, wobei eine Verriegelungsvorrichtung und eine Zentriereinrichtung ersichtlich sind;
- Fig. 3: eine vereinfachte Ansicht eines in Fahrzeugfrontrichtung vorderen Bereichs des vorderen Dachteils, wobei ein Ausschnitt der Verriegelungsvorrichtung der Fig. 2 mit einem sich in Eingriff mit einem Verriegelungsgegenelement befindlichen Verriegelungselement zur Festlegung des Verdecks an einem Windschutzscheibenrahmen und die Zentriereinrichtung gezeigt ist;
- Fig. 4: eine vereinfachte dreidimensionale Ansicht eines Bereichs der Verriegelungsvorrichtung der Figuren 2 und 3 aus einer anderen Perspektive;
- Fig. 5: eine vereinfachte dreidimensionale Ansicht eines Bereichs der Verriegelungsvorrichtung der Figuren 2 bis 4, wobei ein Zentrierelement und ein Zentriergegenelement der Zentriereinrichtung ersichtlich sind;

- Fig. 6: eine schematisierte dreidimensionale Detaildarstellung eines in der Fig. 2 ersichtlichen mit der Verrieglungsvorrichtung zusammenwirkenden Verschlusssystems zur Arretierung des vorderen Dachteils mit dem hinteren Dachteil;
- Fig. 7: eine vereinfachte dreidimensionale Ansicht einer alternativ ausgebildeten Verriegelungsvorrichtung, welche wiederum mit einem Verschlusssystems zur Arretierung des vorderen Dachteils mit dem hinteren Dachteil zusammenwirkt;

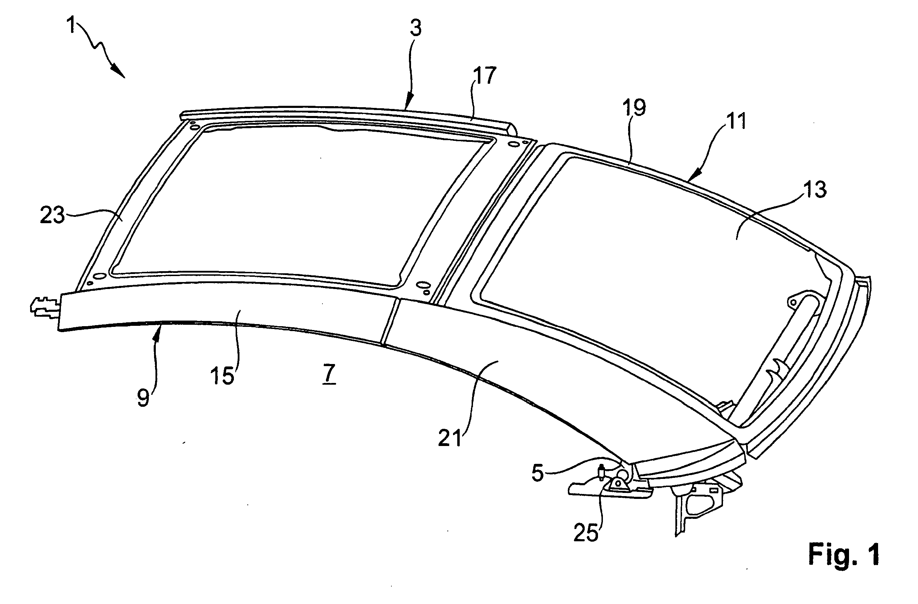

In Fig. 1 ist ein Verdeck 3 eines Cabriolet-Fahrzeugs 1 in einer geschlossenen Position dargestellt, wobei das Verdeck 3 mittels eines Verdeckgestänges 5 zwischen der einen Fahrgastraum 7 überspannenden geschlossenen Position und einer den Fahrgastraum 7 freigebenden offenen Position verfahrbar ist.

Das Verdeck 3 weist ein vorderes Dachteil 9 und ein hinteres Dachteil 11 auf, welches mit einem Rahmen 19 für eine Heckscheibe 13 und seitlichen Begrenzungen 21 gebildet ist, wobei in der Fig. 1 nur die in Fahrzeugfrontrichtung linke seitliche Begrenzung, welche vorliegend als C-Säule 21 ausgebildet ist, dargestellt ist.

Die C-Säulen 21 und der Rahmen 19 für die Heckscheibe 13 sind bei einer Überführung des Verdecks 3 von der dargestellten geschlossenen Position in die offene Position getrennt voneinander um im heckseitigen Bereich des hinteren Dachteils 11 angeordnete Achsen verschwenkbar.

Das vordere Dachteil 9 weist eine erste auf einer in Fahrzeugfrontrichtung linken Seite des vorderen Dachteils 9 angeordnete seitliche Begrenzung 15 und eine zweite auf einer in Fahrzeugfrontrichtung rechten Seite des vorderen Dachteils 9 angeordnete seitliche Begrenzung 17 auf, wobei die seitlichen Begrenzungen jeweils als Seitenholme 15 und 17 ausgebildet sind und ein vorderes mittleres Dachelement 23 seitlich begrenzen.

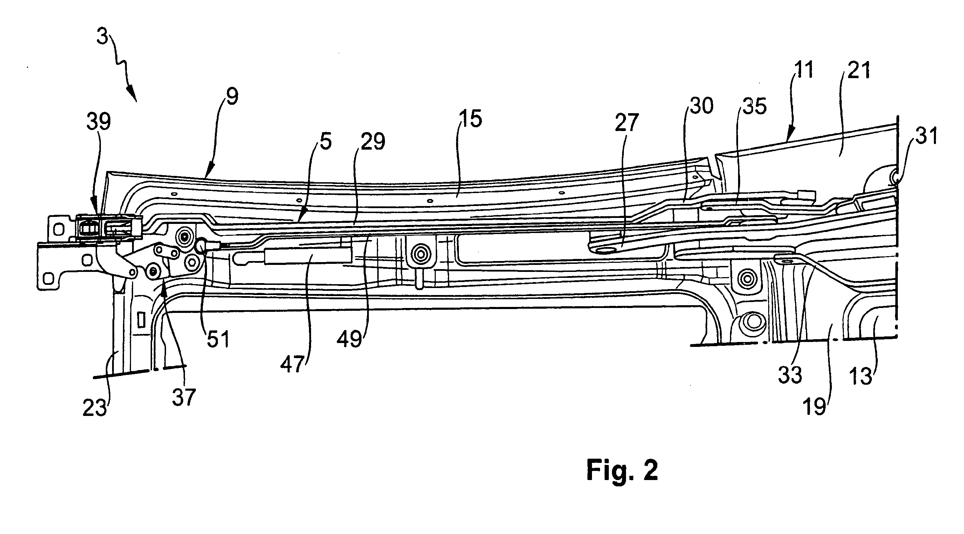

In Fig. 2 ist das Verdeckgestänge 5 in einer Ansicht von unten näher ersichtlich, wobei nur die Elemente des Verdeckgestänges 5 dargestellt sind, welche einer in Fahrzeugfrontrichtung linken Fahrzeugseite zugeordnet sind. Auch die in den folgenden Figuren dargestellten Verdeckelemente zeigen die einer in Fahrzeugfrontrichtung linken Fahrzeugseite zugeordneten Elemente, wobei diese jeweils stellvertretend für im Wesentlichen baugleich ausgebildete und einer in Fahrzeugfrontrichtung rechten Fahrzeugseite zugeordnete Elemente beschrieben werden.

Ein mit einem in der Fig. 1 ersichtlichen Hauptlager 25 verbundener Hauptlenker 27 ist mit einem vorderen Verdeckgestängeelement 29, welches auch als vordere Einlage bezeichnet wird sowie fest an dem ersten Seitenholm 15 angeordnet und gegenüber dem ersten Seitenholm 15 justiert eingebaut ist, gelenkig verbunden. An der C-Säule 21 ist ein erstes hinteres Verdeckgestängeelement bzw. eine erste hintere Einlage 31 und an dem Rahmen 19 für die Heckscheibe 13 ist ein zweites hinteres Verdeckgestängeelement bzw. eine zweite hintere Einlage 33 fest angeordnet.

Das vordere Verdeckgestängeelement 29 ist in einem Bereich 30, in dem das vordere Dachteil 9 und das hintere Dachteil 11 zueinander weisen, schuhförmig ausgebildet, wobei das erste hintere Verdeckgestängeelement 31 über einen Verbindungslenker 35 und das zweite hintere Verdeckgestängeelement 33 jeweils mit dem schuhförmigen Bereich des vorderen Verdeckgestängeelements 29 gelenkig verbunden sind.

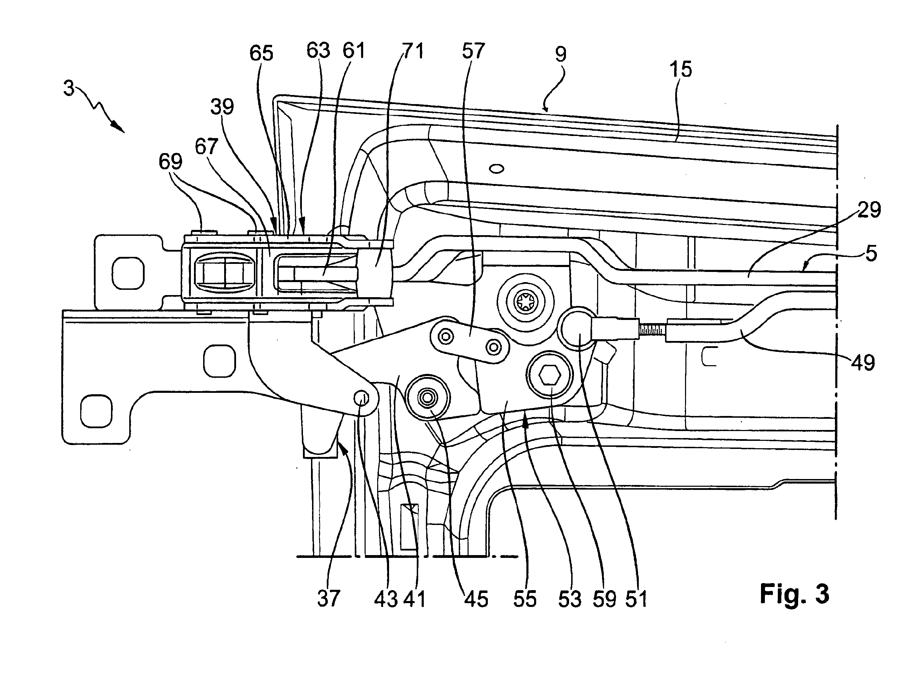

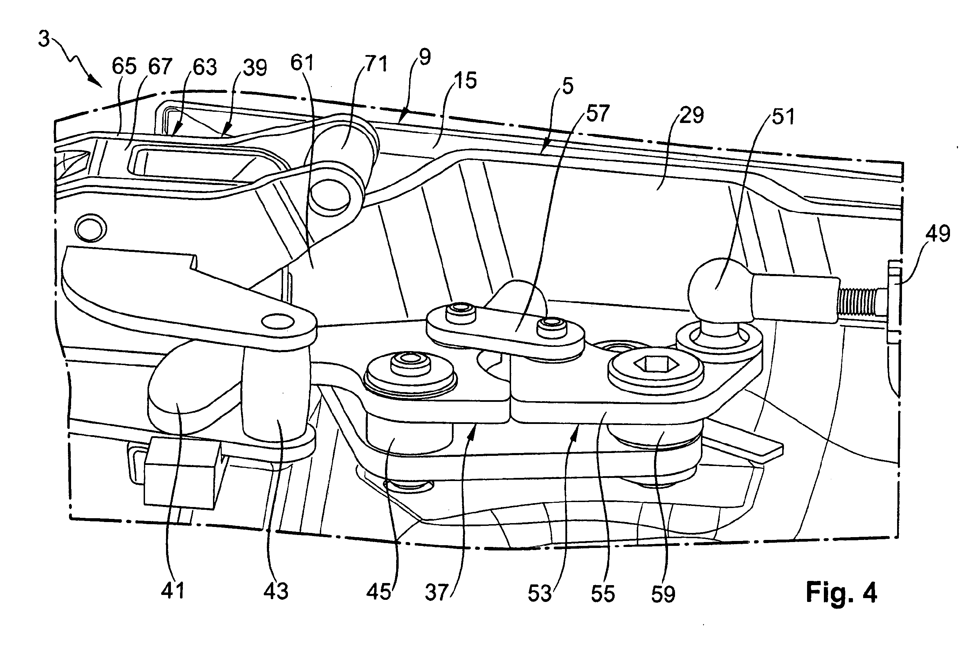

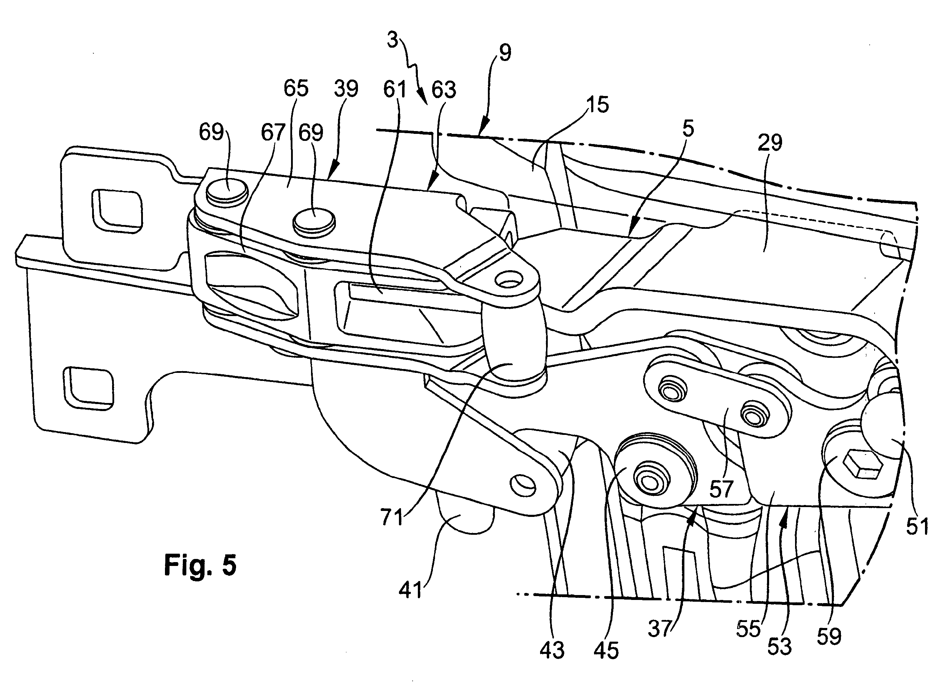

Eine Verriegelungsvorrichtung 37, welche in den Figuren 3 bis 5 näher ersichtlich ist, weist ein als hakenförmiges Element 41 ausgebildetes Verriegelungselement und ein als bolzenförmiges Element 43 ausgebildetes Verriegelungsgegenelement 43 auf, wobei das bolzenförmige Element 43 an einem Windschutzscheibenrahmen des Cabriolet-Fahrzeugs 1 rollenförmig drehbar festgelegt ist.

Das hakenförmige Element 41 ist vorliegend mittels einer Nietverbindung mit einem ersten Nietbolzen 45 drehbar mit dem vorderen Verdeckgestängeelement 29 verbunden und kann von einer Antriebseinrichtung 47 der Verriegelungsvorrichtung 37, welche mit dem vorderen Verdeckgestängeelement 29 fest verbunden ist, derart um seine Festlegung an dem vorderen Verdeckgestängeelement 29 verschwenkt werden, dass das hakenförmige Element 41 bei sich in geschlossener Position befindlichem Verdeck 3 zwischen einer sich in Eingriff mit dem bolzenförmigen Element 43 stehenden Position und einer außer Eingriff mit dem bolzenförmigen Element 43 stehenden Position verschwenkt wird.

Die Antriebseinrichtung 47 wirkt dabei vorliegend nicht direkt, sondern über ein Verbindungselement 49 mit dem hakenförmigen Element 41 zusammen, wobei das Verbindungselement 49 an seinem dem hakenförmigen Element 41 zuweisenden Ende einen Gelenkkopf 51 aufweist.

Zwischen dem Gelenkkopf 51 und dem hakenförmigen Element 41 ist ein Hebelmechanismus 53 angeordnet, welcher mit einem über eine Nietverbindung mit einem zweiten Nietbolzen 59 an dem vorderen Verdeckgestängeelement 29 angelenkten Umlenkhebel 55 und einem Gelenkhebel 57 ausgebildet ist. Der Gelenkkopf 51 ist dabei gelenkig mit dem Umlenkhebel 55 verbunden. Der Gelenkhebel 57 ist jeweils gelenkig mit dem Umlenkhebel 55 und dem hakenförmigen Element 41 verbunden.

Der Umlenkhebel 55 und das hakenförmige Element 41 sind derart ausgebildet, dass sie in der in den Figuren 3 bis 5 dargestellten, sich in Eingriff mit dem bolzenförmigen Element 43 befindlichen Position eine Übertotpunktstellung einnehmen und der Umlenkhebel 55 mit dem hakenförmigen Element 41 in einem dem Gelenkhebel 57 abweisenden Bereich in Anlage ist.

Mittels der Übertotpunktstellung des Umlenkhebels 55 und des hakenförmigen Elements 41 bei sich mit dem bolzenförmigen Element 43 in Eingriff befindlichem hakenförmigen Element 41 wird von der Verriegelungsvorrichtung 37 ein selbsthemmendes System gegen ein unbeabsichtigtes Öffnen der Verriegelungsvorrichtung 37 gebildet.

Der erste Nietbolzen 45 ist vorliegend ein von beiden Seiten vernietbarer Bolzen, wobei der erste Nietbolzen 45 bei einer Anordnung des hakenförmigen Elements 41 an dem vorderen Verdeckgestängeelement 29 zunächst mit dem hakenförmigen Element 41 und anschließend mit dem vorderen Verdeckgestängeelement 29 vernietet wird. Durch eine hierbei entsprechend groß ausbildbare Auflagefläche des ersten Nietbolzens 45 gegenüber dem vorderen Verdeckgestängeelement 29 können große Kräfte im Bereich der Lagerung des hakenförmigen Elements 41 mittels des ersten Nietbolzens 45 übertragen werden. Der erste Nietbolzen ist bei einer derartigen Auflagefläche zudem vorteilhafterweise wenig abscherungsgefährdet.

Im Unterschied zu dem ersten Nietbolzen 45, welcher drehbar oder nicht drehbar mit dem hakenförmigen Element 41 verbunden werden kann, ist der zweite Nietbolzen 59 formschlüssig derart an dem Umlenkhebel 55 festgelegt, dass der Umlenkhebel 55 bei einer Verschwenkung mit dem zweiten Nietbolzen 59 dreht. Auf diese Weise kann eine Notentriegelung der Verriegelungsvorrichtung 37 realisiert werden, indem der zweite Nietbolzen 59 beispielsweise mit einem Sechskant derart verdreht werden kann, dass der Umlenkhebel 55 das hakenförmige Element 41 aus einem Eingriff mit dem bolzenförmigen Element 43 bewegt und das Verdeck 3 somit geöffnet werden kann.

Zur Entriegelung des in den Figuren 3 bis 5 in Eingriff mit dem bolzenförmigen Element 43 befindlichen hakenförmigen Elements 41 bewegt die Antriebseinrichtung 47 das Verbindungselement 49 in Richtung des Hebelmechanismus 53. Hierdurch wird der Umlenkhebel 55 in der in der Fig. 3 dargestellten Ansicht entgegen dem Uhrzeigersinn um den zweiten Nietbolzen 59 verschwenkt. Über die Kopplung mit dem Gelenkhebel 57 wird das hakenförmige Element 41 hierdurch ebenfalls entgegen dem Uhrzeigersinn um den ersten Nietbolzen 45 verschwenkt, bis das hakenförmige Element 41 mit einem nicht näher dargestellten Anlageelement zur Anlage kommt, und somit aus einem Eingriff mit dem bolzenförmigen Element 43 bewegt wird.

Eine Verriegelung der Verriegelungsvorrichtung 37 bei einem außer Eingriff mit dem bolzenförmigen Element 43 stehenden hakenförmigen Element 41 kann bei sich in geschlossener Position befindlichem Verdeck 3 durch eine von der Antriebseinrichtung 47 verursachte, in entgegengesetzter Richtung - also in Fahrzeugfrontrichtung - verlaufende Bewegung des Verbindungselements 49 umgesetzt werden, wobei die vorher beschriebenen Bewegungsabläufe dabei in umgekehrter Reihenfolge zu den Entriegelungsvorgängen durchgeführt werden.

Das vordere Verdeckgestängeelement 29 ist gegenüber herkömmlichen vorderen Verdeckgestängeelementen 29 in einem in Fahrzeugfrontrichtung vorderen Bereich in Form eines vertikalen Absatzes verlängert ausgebildet, wobei der verlängerte Bereich des vorderen Verdeckgestängeelements 29, welcher gehärtet ausgebildet ist, ein Zentrierelement 61 einer Zentriereinrichtung 39 bildet. Das Zentrierelement 61 stellt somit ein freies Stangenende des vorderen Verdeckgestängeelements 29 dar.

Das Zentrierelement 61 ist zum Zusammenwirken mit einem an einem Windschutzscheibenrahmen angeordneten Zentriergegenelement 63 der Zentriereinrichtung 39 ausgebildet, wobei das Zentriergegenelement 63 zur elastischen Lagerung des Zentrierelements mit einem ersten metallischen Element 65, einem von dem ersten Element umfassten zweiten, mit einem Kunststoff gebildeten inneren Element 67 und einer Rolleneinrichtung 71, welche bei einem Einführen des Zentrierelements 61 in das Zentriergegenelement 63 mit dem Zentrierelement 61 zusammenwirkt, ausgebildet ist.

Das zweite Element 67 des insgesamt schuhförmig ausgebildeten Zentriergegenelements 63, welches als Anschlagteil für das Zentrierelement 61 dient, ist vorliegend mittels zwei Nietverbindungen 69, welche insbesondere als mit Selenblöcken ausgebildete Lagerungen ausgebildet sind, schwimmend bzw. elastisch in dem ersten Element 65 des Zentriergegenelements 63 gelagert.

Diese Flexibilität des zweiten Elements 67 gegenüber dem ersten Element 65 des Zentriergegenelements 63 bewirkt einerseits einen Klapperschutz und andererseits eine definierte Vorspannung für das hakenförmige Element 41.

Weiterhin muss eine derartig ausgebildete Zentriereinrichtung vorteilhaftereweise nicht justiert werden, da eine in Fahrzeugquerrichtung vorliegende Toleranz des Zentrierelements 61 durch das zweite Element 67 des Zentriergegenelements 63 ausgeglichen wird, so dass hierdurch eine genaue Justierung des hakenförmigen Elements 41 gegenüber dem bolzenförmigen Element 43 vorgenommen wird.

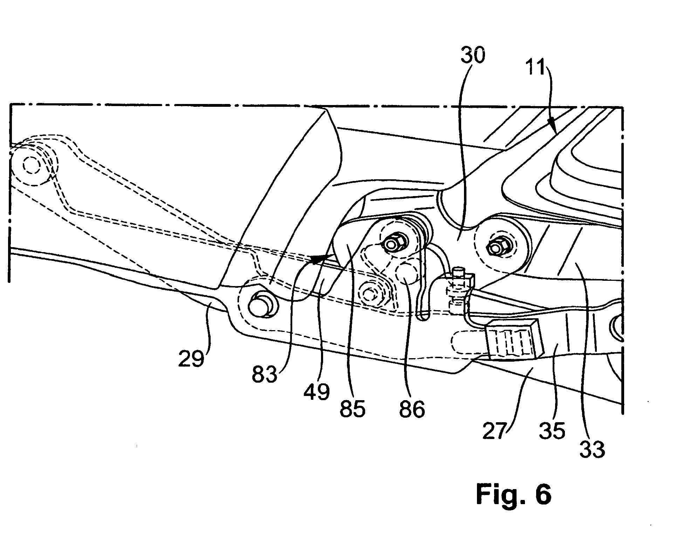

Wie insbesondere der Fig. 6 zu entnehmen ist, ist im Bereich 30 des heckseitigen Endes des vorderen Verdeckgestängeelements 29, in dem das vordere Dachteil 9 und das hintere Dachteil 11 aneinander grenzen, das heckseitige Ende des Verbindungselements 49 mit einem als Verschlusssystem wirkenden Funktionselement 83 verbunden, welches zur Arretierung des vorderen Dachteils 9 in geschlossener Position des Verdecks 3 gegenüber dem hinteren Dachteil 11 dient.

Wenn das Verbindungselement 49 bei einer Schließbewegung der Verriegelungsvorrichtung 37 von der Antriebseinrichtung 47 heckwärts bewegt wird, schwenkt ein an dem Verbindungselement 49 gelenkig angeordneter Verschlusshaken 85 des Verschlusssystems 83 in Fahrzeugheckrichtung um einen an dem Rahmen 19 des hinteren Dachteils 11 angeordneten Zapfen 86, wodurch das vordere Dachteil 9 gegenüber dem Rahmen 19 des hinteren Dachteils 11 festgelegt und in Höhenrichtung gesichert wird.

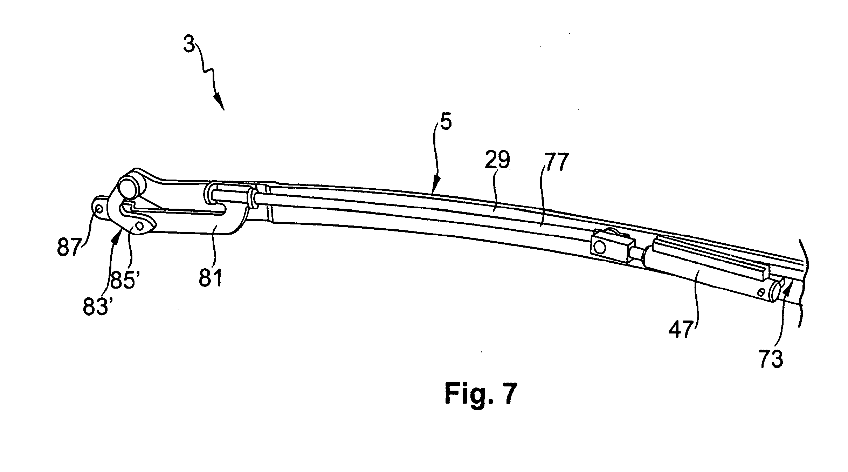

In der Fig. 7 ist eine Ausführungsvariante mit einer alternativ ausgebildete Verriegelungsvorrichtung 73 mit einem gegenüber dem Verbindungselement 49 des oben beschriebenen Ausführungsbeispiels veränderten Verbindungselement 77 gezeigt, wobei das Verbindungselement 77 in einem fahrzeugheckseitigen Bereich mit einem leicht modifizierten Verschlusssystem 83' zusammenwirkt.

Die Verriegelungsvorrichtung 73 weist eine analog zu dem in den Figuren 1 bis 6 gezeigten Ausführungsbeispiel ausgebildete Antriebseinrichtung 47 auf, welche mittels des Verbindungselements 77 in nicht näher dargestellter Weise analog zu dem oben beschriebenen Ausführungsbeispiel mit dem hakenförmigen Element 41 zusammenwirkt.

In einem in Fahrzeugheckrichtung weisenden Bereich wirkt das Verbindungselement 77 gegenüber dem in den Figuren 1 bis 6 gezeigten Ausführungsbeispiel über ein Hebelelement 81 mit einem als Verschlusssystem 83' ausgebildeten Funktionselement zusammen, mittels welchem das vordere Dachteil 9 in geschlossener Position des Verdecks 3 an dem Rahmen 19 für die Heckscheibe 13 des hinteren Dachteil 11 festlegbar ist.

Bei einer von der Antriebseinrichtung 47 verursachten Bewegung des Verbindungselements 77 wird neben der analog dem oben beschriebenen ersten Ausführungsbeispiel durchgeführten Verriegelung des vorderen Dachteils 9 an dem Windschutzscheibenrahmen ein an dem vorderen Verdeckgestängeelement 29 gelenkig angeordneter Verschlusshaken 85' des Verschlusssystems 83' über das Hebelelement 81 um seine Anlenkung an dem vorderen Verdeckgestängeelement 29 in Fahrzeugfrontrichtung verschwenkt, so dass der Verschlusshaken 85' in Eingriff mit einem nicht näher dargestellten, an dem Rahmen 19 des hinteren Dachteils 11 angeordneten Zapfen oder Bolzen gebracht wird und das vordere Dachteil 9 gegenüber dem Rahmen 19 des hinteren Dachteils 11 arretiert wird.

Bei einer Bewegung des Verbindungselements 77 in umgekehrter Richtung wird einerseits das hakenförmige Element 41 außer Eingriff mit dem bolzenförmigen Element 43 und andererseits der Verschlusshaken 85' außer Eingriff mit dem an dem Rahmen 19 des hinteren Dachteils 11 festgelegten Bolzen gebracht, so dass das Verdeck 3 anschließend von seiner geschlossenen Position in seine offene Position überführt werden kann.

Das Hebelelement 81 weist vorliegend eine in Fahrzeugheckrichtung gegenüber der gelenkigen Verbindung mit dem Verschlusshaken 85' ausgebildete Verlängerung mit einem Anbindungspunkt 87 auf, wobei hieran beispielsweise eine Mechanik angeschlossen werden kann, mittels welcher die C-Säule 21 in geschlossener Position des Verdecks 3 in ihre Stratlage bzw. Konturlinie gezogen werden kann. An dem Anbindungspunkt 87 kann weiterhin ein sogenannter Stratbolzen angebunden sein, mit dem eine Kinematik der C-Säulen 21 in eine gestreckte Position gedrückt werden kann.

## Patentansprüche

1. Verdeck eines Cabriolet-Fahrzeugs (1), welches mittels eines Verdeckgestänges (5) zwischen einer einen Fahrgastraum (7) überspannenden geschlossenen Position und einer den Fahrgastraum (7) freigebenden offenen Position verfahrbar ist, mit wenigstens einer Verriegelungsvorrichtung (37, 73) mittels welcher ein vorderer Bereich (9) des Verdecks (3) an einem Windschutzscheibenrahmen bzw. an wenigstens einer A-Säule des Cabriolet-Fahrzeugs (1) festlegbar ist, wobei die Verriegelungsvorrichtung (37, 73) mit einem dem vorderen Bereich (9) des Verdecks (3) zugeordneten Verriegelungselement (41) und einem dem Windschutzscheibenrahmen bzw. einer A-Säule zugeordneten Verriegelungsgegenelement (43) ausgebildet ist, und wobei das Verriegelungselement (41) mittels einer Antriebseinrichtung (47) der Verriegelungsvorrichtung (37, 73) in geschlossener Position des Verdecks (3) zwischen einer mit dem Verriegelungsgegenelement (43) zusammenwirkenden ersten Position und einer das Verriegelungsgegenelement (43) freigebenden zweiten Position verfahrbar ist, und wobei ein Zentrierelement (61) wenigstens einer Zentriereinrichtung (39) im Bereich des vorderen Bereichs (9) des Verdecks (3) vorgesehen ist, welches zum Zusammenwirken mit einem an dem Windschutzscheibenrahmen bzw. der A-Säule angeordneten Zentriergegenelement (63) der Zentriereinrichtung (39) ausgebildet ist, wobei das Zentrierelement (61) integral mit einem Verdeckgestängeelement (29) des Verdeckgestänges (5) ausgebildet ist,
**dadurch gekennzeichnet,**
**dass** das Zentrierelement (61) ein freies Stangenende des Verdeckgestängeelements (29) ist.

2. Verdeck nach Anspruch 1,
**dadurch gekennzeichnet,**
**dass** das Verdeckgestängeelement (29) in seinem das Zentrierelement (61) bildenden Bereich gehärtet ausgebildet ist.

3. Verdeck nach einem der Ansprüche 1 oder 2,
**dadurch gekennzeichnet,**
**dass** das Zentrierelement (61) in geschlossener Position des Verdecks (3) elastisch in dem Zentriergegenelement (63) gelagert ist.

4. Verdeck nach Anspruch 3,
**dadurch gekennzeichnet,**
**dass** das Zentriergegenelement (63) zur elastischen Lagerung des Zentrierelements (61) mit einem metallischen äußeren ersten Element (65) und einem mit einem Kunststoff ausgebildeten inneren zweiten Element (67) ausgebildet ist.

5. Verdeck nach Anspruch 4,
**dadurch gekennzeichnet,**
**dass** das erste Element (65) des Zentriergegenelements (63) über wenigstens einen insbesondere mit einer Nietverbindung (69) ausgebildeten Befestigungspunkt an dem zweiten Element (67) des Zentriergegenelements (63) angeordnet ist, wobei das zweite Element (67) des Zentriergegenelements (63) hierdurch insbesondere schwimmend in dem ersten Element (65) des Zentriergegenelements (63) gelagert ist.

6. Verdeck nach einem der Ansprüche 1 bis 5,
**dadurch gekennzeichnet,**
**dass** das Zentriergegenelement (63) eine Rolleneinrichtung (71) aufweist, welche bei einem Einführen des Zentrierelements (61) in das Zentriergegenelement (63) und/oder umgekehrt mit dem Zentrierelement (61) zusammenwirkt.

7. Verdeck nach einem der Ansprüche 1 bis 6,
**dadurch gekennzeichnet,**
**dass** die Antriebseinrichtung (47) mittels eines Verbindungselements (49, 77) mit dem Verriegelungselement (41) zusammenwirkt.

8. Verdeck nach Anspruch 7,
**dadurch gekennzeichnet,**
**dass** das Verbindungselement (49, 77) in einem dem Verriegelungselement abweisenden Bereich wenigstens ein Funktionselement (83, 83', 85, 85') aufweist.

9. Verdeck nach Anspruch 8,
**dadurch gekennzeichnet,**
**dass** das Funktionselement (83, 83', 85. 85') als ein Verschlusssystem ausgebildet ist, mittels welchem insbesondere ein vorderes Dachteil (9) in geschlossener Position des Verdecks (3) an einem hinteren Dachteil (11) festlegbar ist.

10. Verdeck nach einem der Ansprüche 8 oder 9,
**dadurch gekennzeichnet,**
**dass** das Verbindungselement (77) über ein Hebelelement (81) mit dem Funktionselement (83', 85') zusammenwirkt.

## Claims

1. Hood of a convertible vehicle (1), said hood being displaceable by means of a hood linkage (5) between a closed position spanning a passenger compartment (7) and an open position uncovering the passenger compartment (7), and said hood comprising at least one locking device (37, 73) by means of which a front part (9) of the hood (3) can be fixed respectively to a windscreen frame or to at least one A pillar of the convertible vehicle (1), said locking device (37, 73) being provided with a locking element (41) assigned to the front part (9) of the hood (3) and with a counter-locking element (43) assigned respectively to the windscreen frame or to an A pillar, and said locking element (41) being displaceable, in the closed position of the hood (3), by a drive means (47) of the locking device (37, 73) between a first position cooperating with the counter-locking element (43) and a second position releasing the counter-locking element (43), and a centring element (61) of at least one centring means (39) being provided in the area of the front part (9) of the hood (3), which centring element (61) is provided to cooperate with a counter-centring element (63) of the centring means (39), said counter-centring element (63) being arranged on the windscreen frame or the A pillar, respectively, and said centring element (61) being formed integrally with a hood linkage element (29) of the hood linkage (5),
**characterised in that**
the centring element (61) is a free end of a bar of the hood linkage element (29).

2. The hood according to claim 1, **characterised in that** the hood linkage element (29) is hardened in its portion forming the centring element (61).

3. The hood according to any one of claims 1 or 2, **characterised in that** the centring element (61) is elastically supported in the counter-centring element (63) in the closed position of the hood (3).

4. The hood according to claim 3, **characterised in that** the counter-centring element (63) is provided with a first, metallic outer element (65) and with a second, inner element (67) made of a plastic material to elastically support the centring element (61).

5. The hood according to claim 4, **characterised in that** the first element (65) of the counter-centring element (63) is arranged on the second element (67) of the counter-centring element (63) via at least one mounting point, provided in particular with a rivet connection (69), said second element (67) of the counter-centring element (63) being thereby supported, in particular in a floating manner, in the first element (65) of the counter-centring element (63).

6. The hood according to any one of claims 1 to 5, **characterised in that** the counter-centring element (63) comprises a roller means (71) which cooperates with the centring element (61) when introducting the centring element (61) into the counter-centring element (63) and/or vice versa.

7. The hood according to any one of claims 1 to 6, **characterised in that** the drive means (47) cooperates with the locking element (41) by means of a connecting element (49, 77).

8. The hood according to claim 7, **characterised in that** the connecting element (49, 77) comprises at least one functional element (83, 83', 85, 85') in an area facing away from the locking element.

9. The hood according to claim 8, **characterised in that** the functional element (83, 83', 85, 85') is provided as a closure system by means of which, in particular, a front roof part (9) can be fixed to a rear roof part (11) in the closed position of the hood (3).

10. The hood according to any one of claims 8 or 9, **characterised in that** the connecting element (77) cooperates with the functional element (83', 85') via a lever element (81).

## Revendications

1. Capote d'un véhicule cabriolet (1), ladite capote étant déplaçable, au moyen d'une tringlerie de capote (5), entre une position fermée couvrant un habitacle (7) et une position ouverte découvrant ledit habitacle (7), et ladite capote comportant au moins un dispositif de verrouillage (37, 73) au moyen duquel une partie avant (9) de la capote (3) peut être fixée respectivement à un cadre de pare-brise ou à au moins un montant A du véhicule cabriolet (1), ledit dispositif de verrouillage (37, 73) présentant un élément de verrouillage (41) associé avec la partie avant (9) de la capote (3) et un élément de verrouillage antagoniste (43) associé respectivement avec le cadre de pare-brise ou avec un montant A, et ledit élément de verrouillage (41) étant déplaçable, en position fermée de la capote (3), par un moyen d'entraînement (47) du dispositif de verrouillage (37, 73), entre une première position de coopération avec ledit élément de verrouillage antagoniste (43) et une deuxième position de libération de l'élément de verrouillage antagoniste (43), et un élément de centrage (61) d'au moins un moyen de centrage (39) étant prévu dans la région de la partie avant (9) de la capote (3), cet élément de centrage (61) étant destiné à coopérer avec un élément de centrage antagoniste (63) du moyen de centrage (39), ledit élément de centrage antagoniste (63) étant disposé respectivement sur le cadre de pare-brise ou sur le montant A et ledit élément de centrage (61) étant formé intégralement avec un élément (29) de la tringlerie de capote (5),
**caractérisé en ce que**
l'élément de centrage (61) est une extrémité libre d'une barre de l'élément de tringlerie de capote (29).

2. Capote selon la revendication 1, **caractérisé en ce que** l'élément de tringlerie de capote (29) est durci dans sa région constituant l'élément de centrage (61).

3. Capote selon l'une quelconque des revendications 1 ou 2, **caractérisé en ce que** l'élément de centrage (61) est supporté de manière élastique dans l'élément de centrage antagoniste (63) en position fermée de la capote (3).

4. Capote selon la revendication 3, **caractérisé en ce que**, pour le support élastique de l'élément de centrage (61), l'élément de centrage antagoniste (63) présente un premier élément extérieur (65) en métal et un deuxième élément intérieur (67) en matière plastique.

5. Capote selon la revendication 4, **caractérisé en ce que** le premier élément (65) dudit élément de centrage antagoniste (63) est disposé sur le deuxième élément (67) dudit élément de centrage antagoniste (63) par au moins un point de fixation, qui présente notamment une rivure (69), ledit deuxième élément (67) de l'élément de centrage antagoniste (63) étant ainsi supporté, notamment de manière flottante, dans le premier élément (65) dudit élément de centrage antagoniste (63).

6. Capote selon l'une quelconque des revendications 1 à 5, **caractérisé en ce que** l'élément de centrage antagoniste (63) comporte un moyen à galets (71) coopérant avec l'élément de centrage (61) lors de l'introduction de l'élément de centrage (61) dans l'élément de centrage antagoniste (63) et/ou inversement.

7. Capote selon l'une quelconque des revendications 1 à 6, **caractérisé en ce que** le moyen d'entraînement (47) coopère avec l'élément de verrouillage (41) par un élément de liaison (49, 77).

8. Capote selon la revendication 7, **caractérisé en ce que** l'élément de liaison (49, 77) comporte au moins un élément de fonctionnement (83, 83', 85, 85') dans une région détournée de l'élément de verrouillage.

9. Capote selon la revendication 8, **caractérisé en ce que** ledit élément de fonctionnement (83, 83', 85, 85') est constitué sous forme d'un système de fermeture permettant notamment de fixer une partie de toit avant (9) à une partie de toit arrière (11) en position fermée de la capote (3).

10. Capote selon l'une quelconque des revendications 8 ou 9, **caractérisé en ce que** l'élément de liaison (77) coopère avec l'élément de fonctionnement (83', 85') au moyen d'un élément de levier (81).
